## Europäisches Patentamt

(19) **European Patent Office**

**Office européen des brevets**

(11) Numéro de publication: **0 041 000**
**B1**

(12) **FASCICULE DE BREVET EUROPEEN**

(45) Date de publication du fascicule du brevet:
27.11.85

(51) Int. Cl.⁴: **H 02 K 15/02,** H 02 K 1/14,
H 02 K 17/10

(21) Numéro de dépôt: **81400736.5**

(22) Date de dépôt: **08.05.81**

(54) Machine électrique tournante à stator assemblé.

(30) Priorité: **28.05.80 FR 8011800**

(43) Date de publication de la demande:
**02.12.81 Bulletin 81/48**

(45) Mention de la délivrance du brevet:
**27.11.85 Bulletin 85/48**

(84) Etats contractants désignés:
**AT DE GB IT**

(56) Documents cités:
**FR - A - 1 354 710**
**FR - A - 2 289 062**
**GB - A - 1 372 226**
**US - A - 4 013 910**

(73) Titulaire: **SOCIETE ELECTROMECANIQUE DU
NIVERNAIS - SELNI, 166, rue des Grands Champs,
F-58000 Nevers (FR)**

(72) Inventeur: **Bourget, Jean, THOMSON-CSF-SCPI 173, bld
Haussmann, F-75360 Paris Cedex 08 (FR)**
Inventeur: **Casanova, François,
THOMSON-CSF-SCPI 173, bld Haussmann,
F-75360 PARIS CEDEX 08 (FR)**

(74) Mandataire: **Thrierr, Françoise et al, THOMSON-CSF
SCPI 173, Bld Haussmann, F-75379 Paris Cedex 08 (FR)**

## Description

La présente invention concerne une machine électrique tournante à stator assemblé.

Certaines machines électriques tournantes telles que les moteurs à bobines écrans du type squelette, ont souvent un stator constitué de deux éléments en tôles découpées empilées, assemblées, dont le premier a une forme générale d'un U muni dans sa base, d'un évidement destiné à recevoir un rotor, et le deuxième a une forme d'une barrette, monté entre les extrémités des deux branches du U du premier élément pour supporter une bobine électromagnétique.

Dans une réalisation de machines électriques tournantes de ce type, la fabrication de leur stator entraîne souvent une perte importante de tôles résultant notamment des chutes de découpage provenant des parties de tôle situées entre les deux branches du U du premier élément de ce stator. Plusieurs solutions ont été proposées pour la récupération de ces chutes de découpage. Les unes prévoient une découpe des tôles du rotor dans ces chutes et les autres envisagent une découpe des barrettes constituant le deuxième élément du stator dans ces dernières. Etant donné des configurations spéciales, adoptées jusqu'à présent pour des éléments en barrettes du stator et des tôles du rotor des machines électriques connues, les déchets résultant de cette récupération de chutes de tôle restent importants. Les solutions de récupération proposées ci-dessus s'avèrent de ce fait non satisfaisantes.

Dans le document FR-A 2 289 062 on montre en particulier un procédé de découpe de tôles de stator du genre de celui de l'invention. Mais dans la partie en U, ou fenêtre, de la tôle, il est perdu un espace dont la tôle est alors jetée comme déchet. En effet, dans la fenêtre on découpe bien successivement une saillie de la tôle suivant, puis en remontant, une découpe qui servira de noyau à un bobinage d'excitation. Mais l'invention présentée dans ce document résolvait une autre question. Elle proposait de renverser le noyau de façon à faire varier la dimension libre entre le noyau et le fond de la fenêtre. Cette partie est donc toujours perdue.

La présente invention, ayant pour but d'éviter les inconvénients des machines électriques tournantes connues, rappelés ci-dessus, permet de réaliser une machine électrique tournante à stator assemblé, perfectionnée, économique dont la fabrication n'entraîne qu'un déchet négligeable de tôle utilisée, magnétique ou non.

Une machine électrique tournante à stator assemblé selon l'invention est du genre où le stator est constitué par un empilement de tôles obtenues par découpe d'une bande de tôle magnétique dont la largeur est celle du stator, chaque tôle comportant successivement le long de l'axe de la bande:

– une saillie rectangulaire,
– un alésage rotorique,
– une fenêtre telle que la base de la tôle affecte la forme d'un «U» renversé, destinée à contenir un bobinage d'excitation constitué d'un noyau et d'une bobine,

la saillie rectangulaire venant d'une découpe dans une partie basse de la fenêtre de la tôle précédente dans la bande. La caractéristique essentielle de l'invention est que le noyau est constitué par un empilage de tôles en barrette chaque tôle de la barrette provenant d'une seconde découpe haute de la fenêtre de la tôle, la barrette étant disposée dans la partie basse de la fenêtre, et que la somme de la hauteur de la saillie et de la hauteur de la barrette est égale à la profondeur du creux du «U» de la base de la tôle de façon à ce qu'aucune perte de matière ne se produise dans le sens de la longueur de la bande de tôle.

Pour mieux faire comprendre l'invention, on décrit ci-après un certain nombre d'exemples de réalisations illustrés par des dessins ci-annexés dont

– la fig. 1 représente une vue partielle en perspective, d'une machine électrique tournante selon un premier exemple de réalisation de l'invention;

– la fig. 2a représente une vue schématique d'une bande de tôle dans laquelle sont découpés les deux types d'éléments du stator de la machine électrique de la figure 1 à savoir un élément en U et un élément en barrette;

– la fig. 2b représente une vue schématique d'une tôle de stator de la machine de la figure 1, montrant les deux éléments de cette tôle assemblés, ces éléments étant issus de la découpe de la bande de rôle de la figure 2a;

– la fig. 3a représente une vue schématique d'une bande de tôle dans laquelle sont découpés les deux éléments constituant les tôples du stator d'une machine électrique tournante selon un deuxième exemple de réalisation de l'invention;

– la fig. 3b représente une vue schématique d'une tôle de stator montrant le positionnement, dans l'élément en U, de l'élément-barrette issu de la découpe de la bande de tôle de la figure 3a, dans l'élément en U;

– la fig. 4a représente une vue schématique d'une bande de tôle dans laquelle sont découpés les deux types d'éléments constituant le stator d'une machine électrique tournante selon un troisième exemple de réalisation de l'invention;

– la fig. 4b représente une vue schématique d'une tôle de stator résultant d'un assemblage des deux types d'éléments issus de la découpe de la bande de tôle de la figure 4a, un élément en U et un élément en barrette;

– la fig. 5a représente une vue schématique d'une bande de tôle dans laquelle sont découpés les deux types d'éléments constituant le stator d'une machine électrique tournante selon un quatrième exemple de réalisation de l'invention, et

– la fig. 5b représente une vue schématique d'une tôle de stator résultant d'un assemblage des deux types d'éléments issus de la découpe de la bande de tôle de la figure 5a, un élément en U et un élément en barrette.

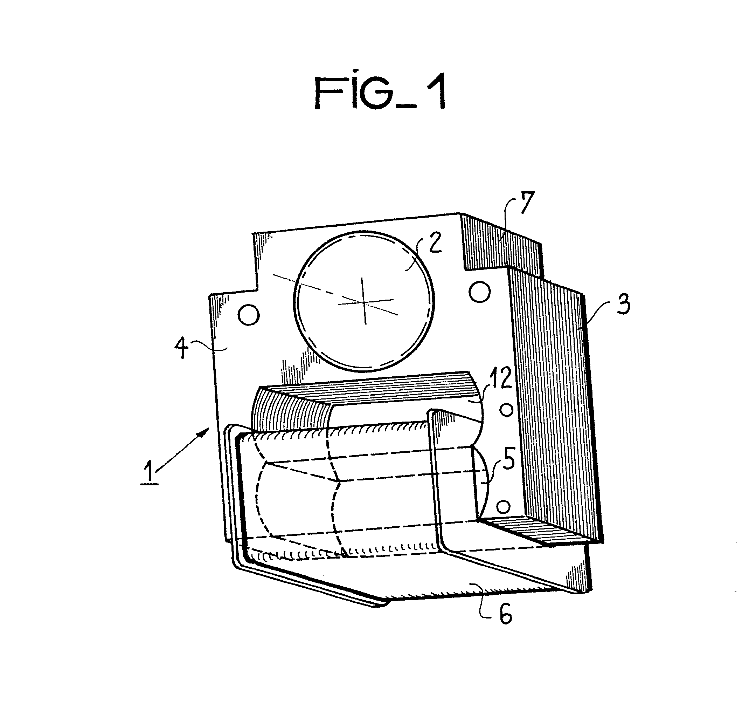

Une machine électrique tournante 1 du type squelette conforme à l'invention comprend (figure 1) un rotor 2 et un stator 3 constitué de deux éléments, un élément 4 ayant la forme d'un U, et un élément 5 affectant la forme d'une barrette, destiné à être assemblé par un ajustement serré entre les extrémités des deux branches de l'élément 4 en U. Le stator 3 est muni d'une bobine électromagnétique 6 portée par cet élément 5 en forme de barrette.

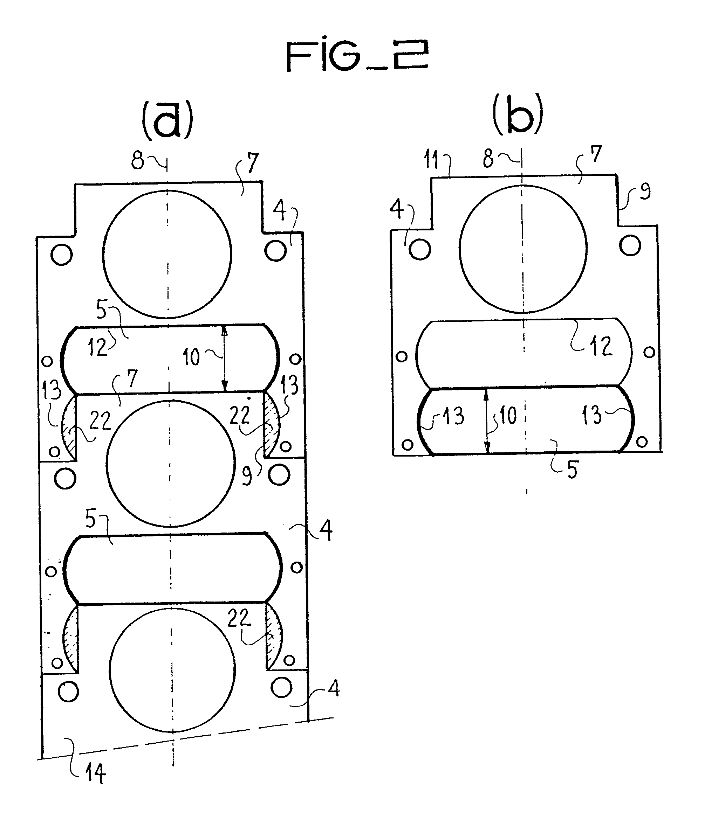

Selon une caractéristique importante de l'invention, le stator 3 de la machine est obtenu par l'empilage d'éléments 4 en forme de U, comprenant en premier lieu dans le creux du U un fond 12 ayant une forme et des dimensions identiques à celles d'une zone longitudinale au moins de l'élément en barrette 5, en deuxième lieu dans les faces internes des parties terminales, en vis-à-vis, des branches du U, des creux ayant des formes et dimensions identiques à celle des extrémités de l'élément 5 en forme de barrette, et destinés à recevoir cet élément-barrette par ajustement serré et contact intime des surfaces, et en troisième lieu dans l'extrémité de la base du U, une saillie (7) rectangulaire, symétrique par rapport à l'axe du U, et dont la hauteur augmentée de la hauteur de l'élément 5 en forme de barrette est égale à la profondeur du creux du U et dont la longueur est égale à la distance des extrémités intérieures des deux branches du U (figure 2).

Dans le premier exemple illustré dans les figures 1 et 2, le stator 3 comprend un bloc-élément 5 constitué d'un empilage d'éléments 5 ayant la forme d'une barrette rectiligne à extrémités arrondies, symétrique respectivement par rapport à son axe longitudinal et à son axe transversal, et un bloc-élément 4 constitué d'un empilage d'éléments 4 en forme de U et présentant dans le creux délimité par ses deux branches, d'une part, un fond creux 12 ayant une forme et des dimensions identiques à celles de l'élément 5 en forme de barrette, et d'autre part dans les faces internes des parties terminales en vis-à-vis des branches du U, des creux 13 ayant la forme et des dimensions identiques à celles des extrémités arrondies de l'élément 5.

Dans la zone d'extrémité de l'élément 4 en U vient s'imbriquer une saillie 7 rectangulaire, symétrique par rapport à l'axe 8 du U et ayant une hauteur 9 prédéterminée de manière que sa propre valeur augmentée de la valeur de la hauteur 10 de l'élément 5 en forme de barrette soit égale à la hauteur totale du creux du U (figure 2a). Cette saillie 7 rectangulaire a une longueur 11 égale à la distance des extrémités intérieures des deux branches du U (figure 2a). Suivant un procédé de fabrication d'une machine électrique tournante selon l'invention, tel qu'illustré en figure 2, les éléments 4 en forme de U et les éléments-barrettes 5 sont réalisés par découpage dans une bande de tôle ayant la largeur des éléments 4. Comme montré en figure 2a, les éléments 4 se présentent imbriqués les uns dans les autres. Autrement dit, la saillie 7 d'un élément en U se trouve à l'intérieur du U de l'élément 4 précédent. Au dessus de cette saillie 7, dans le creux du U, prend place l'élément 5 en forme de barrette. Etant donné que la somme de la valeur de la hauteur 9 de cette saillie 7 et de celle de la hauteur 10 de cette barrette est égale à la profondeur du creux du U de cette première tôle, aucune perte de matière ne se produit dans le sens de la longueur de la bande 14 de tôle. Cependant la saillie 7 de l'élément 4 étant rectangulaire et les surfaces internes des parties terminales en vis-à-vis des branches du U étant pourvues de creux 13 qui ont la forme et des dimensions identiques à celles des extrémités arrondies de l'élément 5 en barrette, les seules chutes de découpage sont constituées par des déchets en forme de segment de cercle 22 dont l'arc de cercle est constitué par le contour du creux 13 et la corde qui sous-tend cet arc est constitué par le bord latéral rectiligne de la saillie 7. Ces chutes de découpage ne constituent de ce fait qu'une perte négligeable de tôle utilisée.

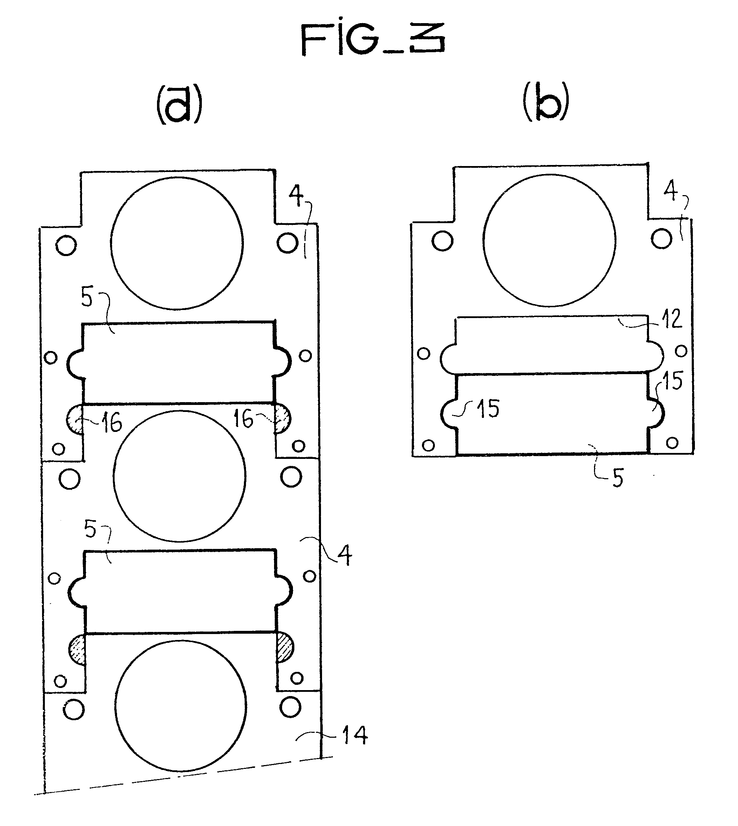

Selon un deuxième exemple de réalisation de l'invention (figure 3), dans le stator 3 de la machine électrique tournante 1, l'élément 5 en forme de barrette présente, comme celui du premier exemple, une forme symétrique dans le sens longitudinal et dans le sens transversal et des dimensions identique à celles du fond creux 12 du U de l'élément 4. Cependant, dans cet exemple, l'élément-barrette 5 ne comprend pas des extrémités arrondies mais des extrémités droites munies dans leur centre d'une saillie en demi-lune 15 (figure 3b).

Dans le découpage permettant d'obtenir des tôles constituant ces éléments 4 et 5 du stator 3 dans une même bande de tôle 14, les chutes sont uniquement constituées par des surfaces 16 de tôle, équivalentes à celles des saillies en demi-lune 15 des extrémités de l'élément 5. Ces chutes sont donc négligeables.

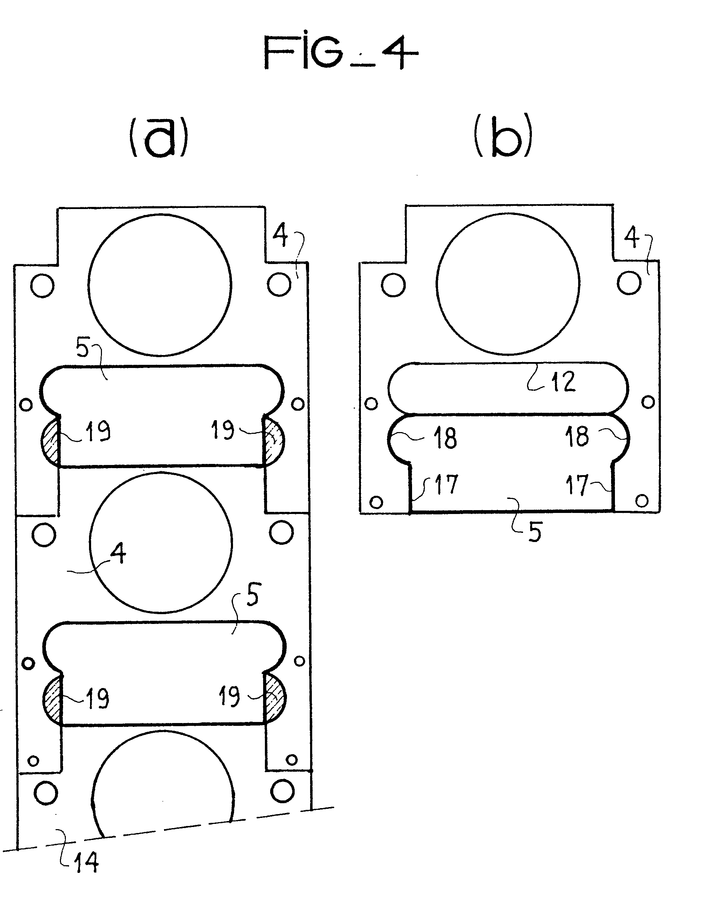

Selon un troisième exemple de réalisation de l'invention (figure 4), dans le stator 3 de la machine, l'élément-barrette 5 présente une forme symétrique par rapport à son axe transversal et asymétrique par rapport à son axe longitudinal. L'élément-barrette 5 comprend, en effet, des extrémités ayant une partie droite 17 et une partie en demi-lune 18. L'élément 4 en U du stator 3 présente un fond 12 ayant une forme et des dimensions identiques à celles d'une zone longitudinale de l'élément 5 délimitée par les parties en demi-lune 18 de ses extrémités.

Dans le découpage, à partir d'une bande de tôle 14, de ces éléments 4 et 5 du stator 3, les chutes sont uniquement constituées par des surfaces 19 de tôle équivalentes à celles des parties en demi-lune 18 des extrémités de l'élément 5. Ces chutes sont donc négligeables.

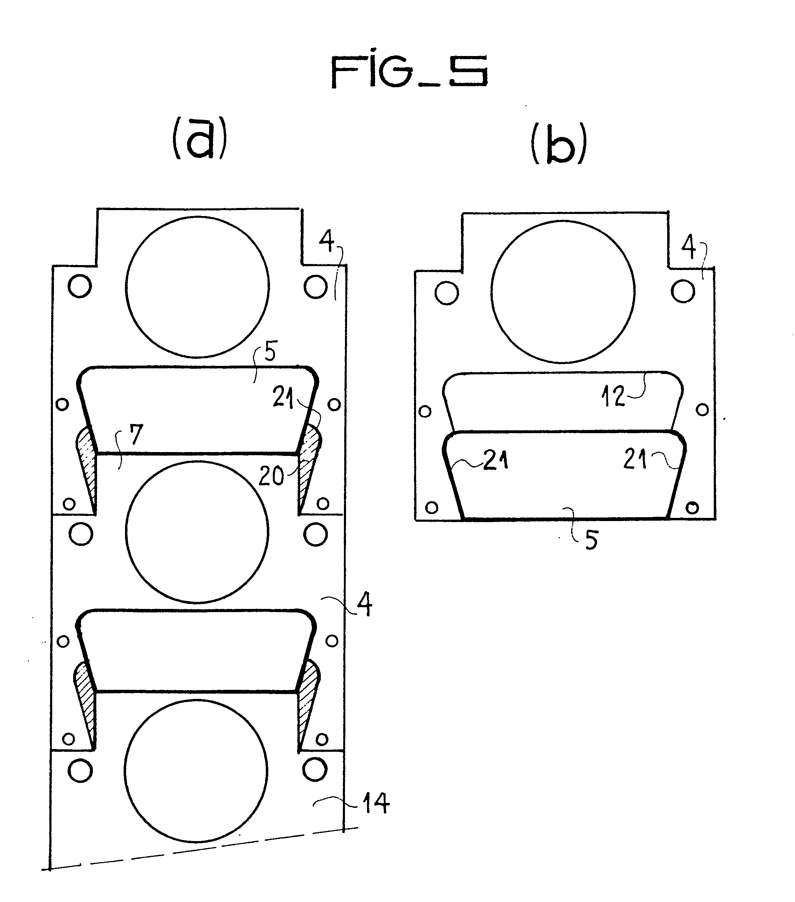

Selon un quatrième exemple de réalisation de l'invention (figure 5) l'élément-barrette 5 du stator 3 de la machine a une forme trapézoïdale dont les angles de la grande base sont arrondis.

L'élément 4 en U du stator 3 présente un fond 12 ayant une forme et des dimensions identiques à celles d'une zone longitudinale de l'élément 5, qui recouvre la grande base de ce dernier.

Après découpage dans une bande de tôle 14 de ces éléments 4 et 5 du stator 3, représenté en figure 5, les chutes sont uniquement constituées par des surfaces 20 délimitées (figure 5a) en premier lieu par les contours des creux 21 formés dans les surfaces internes des parties terminales en vis-à-vis des branches du U d'un élément 4, en deuxième lieu par les bords latéraux de la saillie rectangulaire 7 de l'extrémité du U d'un deuxième élément 4, imbriqué et en troisième lieu par les bords non parallèles de l'élément 5 de forme trapézoïdale. Ces chutes sont donc négligeables.

Dans la fabrication de la machine électrique tournante 1, suivant l'invention, ces pertes dues aux déchets résultant du découpage dans des tôles magnétiques des éléments 4 et 5 du stator 3 de la machine électrique tournante 1 sont ainsi avantageusement réduites à une valeur nettement inférieure aux pertes entraînées par la fabrication des machines électriques connues.

**Revendications**

1. Machine électrique tournante à stator assemblé, dont le stator est constitué par un empilement de tôles obtenues par découpe d'une bande de tôle magnétique dont la largeur est celle du stator, chaque tôle comportant successivement le long de l'axe (8) de la bande:

– une saillie rectangulaire (7),
– un alésage rotorique,
– une fenêtre (10, 12, 13) telle que la base de la tôle affecte la forme d'un «U» renversé, destinée à contenir un bobinage (6) d'excitation constitué d'un noyau (5) et d'une bobine,

la saillie rectangulaire (7) venant d'une découpe dans une partie basse de la fenêtre (10, 12, 13) de la tôle précédente dans la bande, caractérisée en ce que le noyau est constitué par un empilage de tôles en barrette (5) chaque tôle de la barrette (5) provenant d'une seconde découpe haute (10) de la fenêtre de la tôle, la barrette (5) étant disposée dans la partie basse de la fenêtre, et en ce que la somme de la hauteur (9) de la saillie (7) et de la hauteur (10) de la barrette (5) est égale à la profondeur du creux du «U» de la base de la tôle de façon à ce qu'aucune perte de matière ne se produise dans le sens de la longeur de la bande (14) de tôle.

2. Machine selon la revendication 1, caractérisée en ce que l'élément-barrette (5) du stator est symétrique par rapport à son axe longitudinal et par rapport à son axe transversal, et en ce que ses extrémités sont arrondies.

3. Machine selon la revendication 1, caractérisée en ce que l'élément-barrette (5) du stator est symétrique par rapport à son axe longitudinal et par rapport à son axe transversal, et en ce que ses extrémités, rectilignes, sont munies respectivement, en leur centre, d'une saillie (15) en demi-lune.

4. Machine selon la revendication 1, comportant un stator muni d'un élément-barrette (5) symétrique par rapport à son axe longitudinal et asymétrique par rapport à son axe transversal, ses extrémités présentant chacune une partie (17) rectiligne prolongée par une partie (18) en demi-lune, caractérisée en ce que ce stator comporte un élément (4) en U présentant un fond (12) de U ayant une forme et des dimensions identiques à celles d'une zone longitudinale de l'élément-barrette (5) et présentant à ses extrémités des parties (18) en demi-lune.

5. Machine selon la revendication 1, caractérisée en ce que son stator (3) comprend, d'une part, un élément-barrette (5) ayant une forme trapézoïdale dont les angles de la grande base sont arrondis, et, d'autre part, un élément (4) en U présentant un fond (12) de U ayant une forme et des dimensions identiques à celles d'une zone longitudinale de l'élément-barrette (5) qui recouvre la grande base de l'élément-barrette (5).

**Patentansprüche**

1. Elektrische rotierende Maschine mit zusammengesetztem Stator, deren Stator durch einen Stapel von Blechen gebildet ist, welche durch Stanzen eines magnetischen Blechstreifens erhalten werden, dessen Breite die des Stators ist, wobei jedes Blech entlang der Achse (8) des Streifens umfasst:

– einen rechtwinkligen Vorsprung (7),
– eine Rotorbohrung,
– ein solches Fenster (10, 12, 13), dass der Fussteil des Bleches die Form eines umgekehrten «U» annimmt, welches dazu bestimmt ist, eine Erregerspule (6) aufzunehmen, die aus einem Kern und einer Wicklung gebildet ist,

wobei der rechtwinklige Vorsprung (7) durch Stanzen in einem niedrigen Teil des Fensters (10, 12, 13) des in dem Streifen vorausgehenden Bleches entsteht, dadurch gekennzeichnet, dass dieser Kern durch einen Stapel von Blechen in Form eines Stäbchens (5) gebildet ist, wobei jedes Blech des Stäbchens (5) durch eine zweite, hohe Stanzung (10) des Blechfensters entsteht und wobei das Stäbchen (5) in dem niedrigen Teil des Fensters angeordnet ist, und dass die Summe der Höhe (9) des Vorsprungs (7) und der Höhe (10) des Stäbchens (5) gleich der Tiefe des Hohlraumes des «U» des Fussteils des Bleches ist, so dass keinerlei Materialverlust in Längsrichtung des Blechstreifens (14) entsteht.

2. Maschine nach Anspruch 1, dadurch gekennzeichnet, dass das Stäbchenelement (5) des Stators symmetrisch in bezug auf seine Längsachse und in bezug auf seine Querachse ist und dass seine Enden abgerundet sind.

3. Maschine nach Anspruch 1, dadurch gekennzeichnet, dass das Stäbchenelement (5) des Stators symmetrisch in bezug auf seine Längsachse und in bezug auf seine Querachse ist, und dass seine geradlinigen Enden jeweils in ihrer Mitte mit einem halbmondförmigen Vorsprung (15) versehen sind.

4. Maschine nach Anspruch 1, die einen Stator mit einem Stäbchenelement (5) umfasst, welches symmetrisch in bezug auf seine Längsachse und asymmetrisch in bezug auf seine Querachse ist, wobei seine Enden jeweils einen geradlinigen Teil (17) aufweisen, der durch einen halbmondförmigen Teil (18) verlängert wird, dadurch gekennzeichnet, dass dieser Stator ein U-Element (4) aufweist, bei dem der Boden (12) des U eine Form und Abmessungen aufweist, die gleich denen einer Längszone des Stäbchenelementes (5) sind, und an seinen Enden halbmondförmige Teile (18) aufweist.

5. Maschine nach Anspruch 1, dadurch gekennzeichnet, dass ihr Stator (3) einerseits ein Stäbchenelement (5) von der Form eines Trapezes, bei der die Winkel der grossen Basis abgerundet sind, und andererseits ein U-Element (4) umfasst, das einen U-Boden (12) aufweist, dessen Form und Abmessungen gleich denen einer Längszone des Stäbchenelementes (5) sind, welche die grosse Basis des Stäbchenelementes (5) überdeckt.

## Claims

1. Rotating electrical machine with assembled stator, the stator being formed of a pile of sheets obtained by punching from a strip of magnetic sheet the width of which is that of the stator, each sheet comprising successively along the axis (8) of the strip:

– a rectangular projection (7),
– a rotor bore,
– a window (10, 12, 13) which is such that the base of the sheet has the shape of an inverted "U" adapted to contain an excitation coil (6) formed of a core (5) and a winding,
the rectangular projection (7) originating from punching within a low portion of the window (10, 12, 13) of the sheet preceding in the strip, characterized in that the core is formed by a pile of sheets in the form of a rod (5), each sheet of the rod (5) originating from a second, high punching (10) of the sheet window, the rod (5) being located in the low portion of the window, and in that the sum of the height (9) of the projection (7) and of the height (10) of the rod (5) being equal to the depth of the hollow of the "U" of the sheet base in such a manner that no loss of material occurs in the longitudinal direction of the sheet strip (14).

2. Machine according to claim 1, characterized in that the rod element (5) of the stator is symmetrical with respect to its longitudinal axis and with respect to its transverse axis and in that its ends are rounded.

3. Machine according to claim 1, characterized in that the rod element (5) of the stator is symmetrical with respect to its longitudinal axis and with respect to its transverse axis and in that its rectilinear ends are respectively provided with a crescent-shaped projection (15) in their centers.

4. Machine according to claim 1, comprising a stator provided with a rod element (5) which is symmetrical with respect to its longitudinal axis and asymmetrical with respect to its transverse axis, each of its ends presenting a rectilinear part (17) extended by a crescent-shaped portion (18), characterized in that this stator comprises a U-shaped element (4) having a bottom (12) of the U which has a shape and dimension which are identical to those of a longitudinal zone of the rod element (5) and has crescent-shaped portions (18) at its ends.

5. Machine according to claim 1, characterized in that its stator (3) comprises, on the one hand, a rod element (5) having at trapezoidal form the angles of the major base of which are rounded, and on the other hand, a U-shaped element (4) having a bottom (12) of the U the shape and dimensions of which are identical to those of a longitudinal zone of the rod element (5) which covers the major base of the rod element (5).

# FIG_1

# FIG_2

## (a)

## (b)

# FIG_3

(a)

(b)

# FIG_4

## (a)

## (b)

# FIG_5

(a)

(b)